# EUROPEAN PATENT APPLICATION

(11) **EP 1 492 277 A2**
(43) Date of publication of application: **29.12.2004**
(21) Application number: 04251825.8
(22) Date of filing: 26.03.2004
(51) Int. Cl.: H04L 12/28

(54) **Communication terminal and communication system**

(30) Priority: 27.06.2003 JP 2003183737
(71) Applicant: Hitachi, Ltd., Chiyoda-ku, Tokyo (JP)
(72) Inventor: Miyabayashi, Shinji, Hitachi, Ltd., IP Group,, Chiyoda-ku, Tokyo 100-8220 (JP); Sudo, Shigeyuki, Hitachi, Ltd., IP Group,, Chiyoda-ku, Tokyo 100-8220 (JP)
(74) Representative: Calderbank, Thomas Roger

(57) **Abstract**

A communication terminal (1a,1b,1c) has a first transmitter/receiver (6), a second transmitter/receiver (7) and a controller (101). The controller operates to activate the second transmitter/receiver (7) when the first transmitter/receiver receives (6) a request for activating the second transmitter/receiver (7).

## Description

The present invention relates to a communication terminal having a plurality of transmitters/receivers and a communication system utilizing the communication terminal.

Laid-open Japanese Patent Application No. 2002-125069 discloses a wireless IP (Internet Protocol) telephone, which comprises a first wireless transmitting/receiving portion operable to establish a communication via a public mobile communications network, and a second wireless transmitting/receiving portion operable to establish a communication via a wireless LAN (Local Area Network). When it is detected that the wireless IP telephone has moved to within an access zone of a base station in the wireless LAN on the basis of a predetermined radio signal transmitted from the wireless LAN base station, operation of the first wireless transmitting/receiving portion is suspended and the second wireless transmitting/receiving portion is activated.

The publication also discloses that the first wireless transmitting/receiving portion is deactivated and the second wireless transmitting/receiving portion is activated, when it is detected that establishing a connection to the public mobile communications network is difficult.

The second wireless transmitting/receiving portion of the wireless IP telephone must be kept active to be ready to receive the radio signal transmitted from the wireless LAN base station, thereby increasing battery power consumption. This leads to adversely reducing a total amount of time during which the telephone can be used for making communications and be kept in its standby mode. Thus, the conventional wireless IP telephone requires frequent recharging, deteriorating its user-friendliness.

Further, in the situation where the second wireless transmitting/receiving portion is activated upon detection that establishing the connection between the wireless IP telephone and the public mobile communications network is difficult, the conventional wireless IP telephone cannot detect an incoming phone call through the wireless LAN when the wireless IP telephone is located within a range in which a communication via the public mobile communications network is possible. This means that the IP telephone cannot communicate via the wireless LAN when such a communication is necessary.

There is a need for an improved communication terminal and an improved communication system.

The above stated needs are met by a communication terminal having a plurality of transmitters/receivers and a communication system utilizing the communication terminal. The communication terminal has a first transmitter/receiver, a second transmitter/receiver and a controller. The controller operates to activate the second transmitter/receiver when the first transmitter/receiver receives a request for activating the second transmitter/receiver.

In the drawings
Fig. 1 is a diagrammatic view showing an exemplary structure of a communication system.
Fig. 2 is a block diagram showing an exemplary internal structure of a communication terminal.
Fig. 3 is a sequence diagram illustrating an exemplary timing of events in operation of the communication system.
Fig. 4 shows two related time diagrams for explaining the timings of events in operation of a wireless transmitter/receiver and a wireless LAN transmitter/receiver of the communication terminal, respectively.

There will be described an example of a communication system.

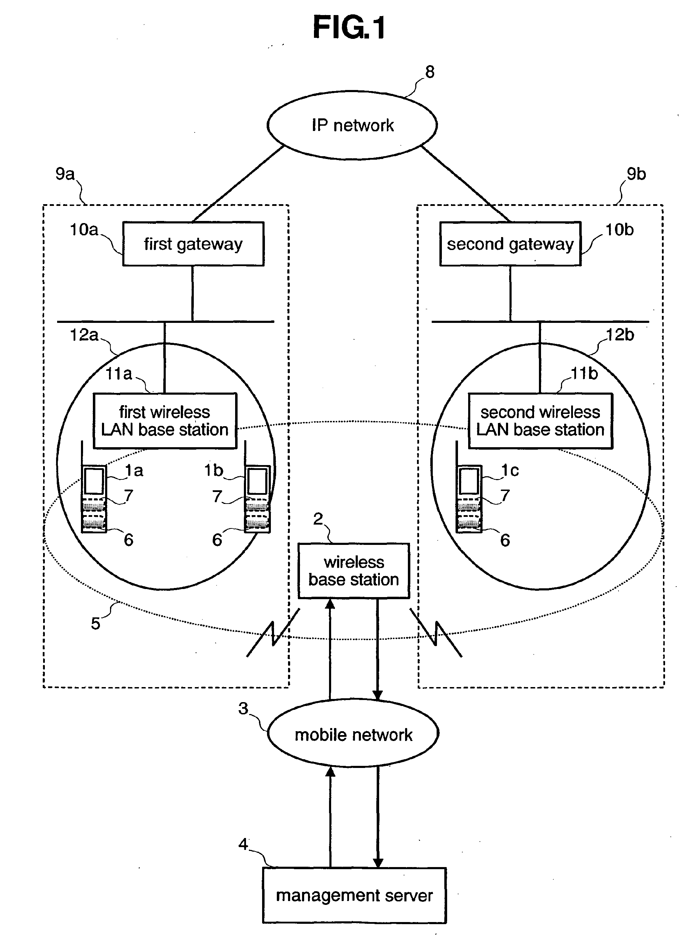

In Fig. 1, reference numerals 1a, 1b, 1c denote a communication terminal, such as a portable phone, a Personal Digital Assistant (PDA) or a handheld personal computer. The communication terminal includes a wireless transmitter/receiver 6 which is connectable to a wireless base station 2, and a wireless LAN (Local Area Network) transmitter/receiver 7 which is connectable to a wireless LAN base station 11.

Each communication terminal 1a,1b,1c is connectable to the wireless base station 2 when the terminal 1a,1b,1c is located within a service zone 5. The communication terminal 1a,1b or 1c is also connectable to an IP (Internet Protocol) network 8 through the wireless LAN base station 11a or 11b; when the communication terminal 1a,1b or 1c is located within an access zone 12a or 12b.

The wireless transmitter/receiver 6 may be a transmitter/receiver in a CDMA (Code Division Multiple Access) system or the like. The access zone 12, which is generally called a "hot spot", refers to a specific part of a range of an access point such as a wireless LAN base station, within which a wireless Internet access service is available to the public.

The wireless base station 2 is connected via a mobile network 3 to a management server 4. The management server 4 receives an authentication request from the communication terminal 1a,1b or 1c as a sender or a sending end, executes an authentication, and then sends the communication terminal 1a, 1b or 1c an activation command for activating the wireless LAN transmitter/receiver 7 of that terminal 1a,1b or 1c. A gateway 10a, 10b is connected to the wireless base station 11a, 11b via a wired LAN, for example, in a subnet 9a, 9b, as well as to the IP network 8.

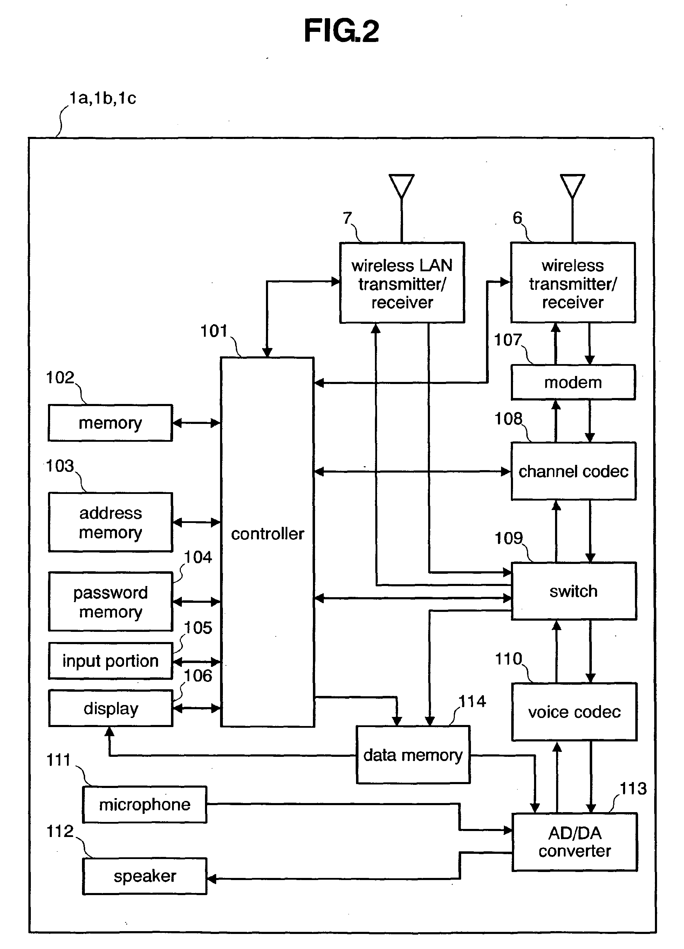

Next, there will be described an internal structure of the communication terminal 1a,1b or 1c, by referring to Fig. 2.

A controller 101 may be a CPU (central processing unit) or the like, and controls operation of each of the elements described below and processes data inputted into the communication terminal 1a,1b or 1c. A memory 102 functions to temporarily store data while the controller 101 operates as mentioned above. An address memory 103 stores an address of the user of the communication terminal 1, e.g. an email address, an IP address and/or a telephone number. The address memory 103 may store other addresses owned by respective users of other communication terminals, if needed. A password memory 104 stores a password corresponding to the user address of the communication terminal 1.

A switch 109 is switchable on the basis of a control signal from the controller 101, such that data from either the wireless transmitter/receiver 6 or the wireless LAN transmitter/receiver 7 is selectively passed through the switch 109. The data passed through the switch 109 is inputted into a voice codec 110 or a data memory 114. In this arrangement where the switch 109 is selectively switched such that an input from one of the wireless transmitter/receiver 6 and the wireless LAN transmitter/receiver 7 is permitted to pass through the switch 109, the voice codec 110, a microphone 111, a speaker 112 and an AD/DA converter 113 can be commonly used for processing data from and to both the wireless transmitter/receiver 6 and the wireless LAN transmitter/receiver 7.

An input portion 105 includes numerical keys and function keys, for example, which are operated when the user inputs information such as a phone number and a user address. The input portion 105 may also have a voice recognition system, for example, and a voice activation may be used as an input method. A display 106 shows various information and may consist of a liquid crystal display or the like. The display 106 may take the form of a touch panel, which is an arrangement where the user touches at a screen of a display as the touch panel, with a finger or a suitable pen or the like to input characters and numbers into the communication terminal 1.

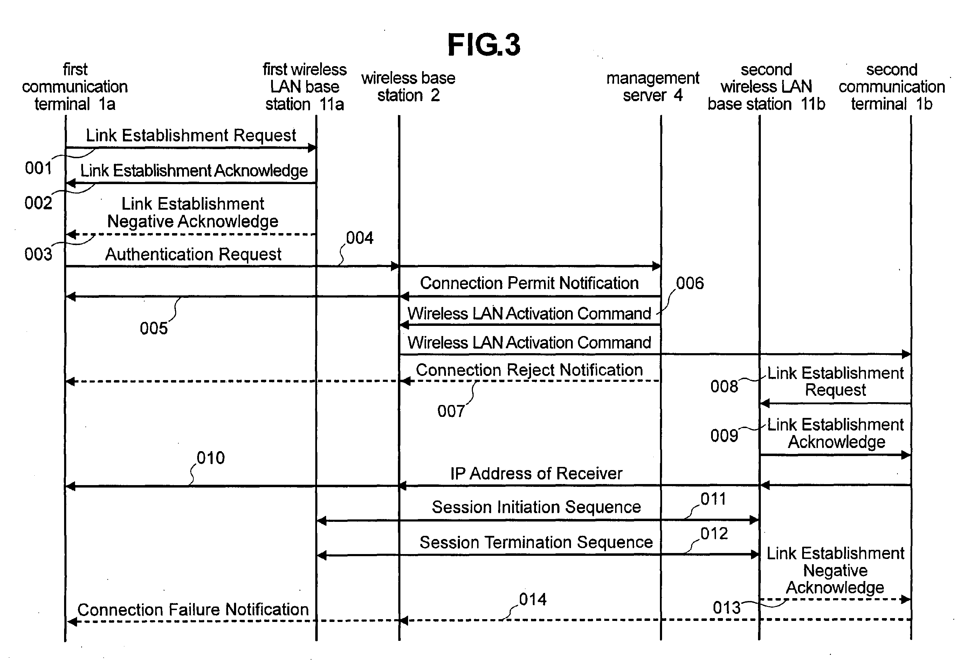

There will be next described the operation of the communication system utilizing a wireless LAN, by referring to the sequence diagram of Fig. 3. In the following description, reference numeral 1a denotes a communication terminal as a sender or sending end, while reference numeral 1b denotes a communication terminal as a receiver or receiving end.

When the user of the communication terminal 1a desires to transmit data to the communication terminal 1b and designates a wireless LAN as a network through which the data is to be transmitted, the controller 101 of the communication terminal 1a operates the display 106 to display a message requiring the user to input the user's password. This inputting of the user's password is implemented each time the user requests data transmission via the wireless LAN, so that a person other than the user cannot transmit any data without authorization by the user. It is noted that an option to enable the user to skip the entry of the password is preferably provided, since the inputting of the password may be felt bothersome by the user in some cases. Where the option is provided, the user can select one of the two set-up modes, i.e. the password requiring mode and the password non-requiring mode, depending upon a pattern in which the communication terminal 1a is used, thereby enhancing the user-friendliness.

If the user of the communication terminal 1a does not possess a password, the management server 4 registers identification information of the user and issues to the user an address (e.g. an email address, an IP address and/or a telephone number) and a password each unique to the user. The issued address and password are stored in the address memory 103 and the password memory 104, respectively.

On the other hand, if the user's password is inputted, the controller 101 activates the wireless LAN transmitter/receiver 7a. Until the user requests the data transmission via the wireless LAN as described above, the controller 101 does not activate the wireless LAN transmitter/receiver 7a but maintains the portion 7a in a standby mode in which its operation is suspended, even after the communication terminal 1a has been powered on. Holding the wireless LAN transmitter/receiver 7a in the standby mode may contributes to reducing electric power consumption.

After its activation, the wireless LAN transmitter/receiver 7a forwards a Link Establishment Request to the wireless LAN base station 11a, as indicated by sequence No. 001 in Fig. 3. If the wireless LAN base station 11a permits a link to be established between the communication terminal 1a and the wireless LAN base station 11a, a Link Establishment Acknowledge is forwarded to the communication terminal 1a, as indicated by sequence No. 002. On the other hand, if the wireless LAN base station 11a does not permit the link between the communication terminal 1a and the wireless LAN base station 11a to be established, the wireless LAN base station 11a forwards a Link Establishment Negative Acknowledge to the communication terminal 1a, as indicated by sequence No. 003. Upon receipt of the Link Establishment Negative Acknowledge, the communication terminal 1a suspends the operation of the wireless LAN transmitter/receiver 7a. The feature of deactivating the wireless LAN transmitter/receiver 7a when the communication terminal 1a cannot establish a link to the wireless LAN, may reduce the power consumption. In the case where the link cannot be established, the display 106 shows a message indicating that the communication via the wireless LAN is not possible, to notify the user of the unavailability of the wireless LAN communication.

If the wireless LAN transmitter/receiver 7a receives the Link Establishment Acknowledge, the display 106 shows a display prompting the user to input an address of the receiver or the communication terminal 1b. The user inputs the address through the input portion 105, or alternatively, calls up on the display 106 a list of addresses stored in the address memory 103 and selects a desired one among the list of the addresses.

Once the address of the receiver is inputted or selected, the channel codec 108 executes an error correction on data related to the address and password of the communication terminal 1a and the address of the communication terminal 1b. The data on which the error correction has been implemented is then transmitted to a modem 107 to be modulated.

The communication terminal 1a transmits the modulated data of the addresses and the password to the management server 4 via the wireless base station 2, and requests the management server 4 to authenticate the user, as indicated by sequence No. 004. The management server 4 executes an authentication of the user of the sender, based on the data representing the address and password of the communication terminal 1a. By this arrangement, where the management server 4 authenticates the user of the communication terminal 1a based on the address and the password, misuse of the communication terminal 1a may be effectively prevented. If the user is successfully authenticated, the management server 4 forwards a Connection Permit Notification to the communication terminal 1a through the wireless base station 2, as indicated by sequence No. 005, as well as forwarding a Wireless LAN Activation Command to the communication terminal 1b, as indicated by the sequence No. 006. This Wireless LAN Activation Command may be transmitted by being attached to an e-mail.

On the other hand, if the authentication of the user of the sender fails, the management server 4 transmits a Connection Reject Notification to the communication terminal 1a, as indicated by sequence No. 007. Upon receipt of the Connection Reject Notification, the communication terminal 1a suspends the operation of the wireless LAN transmitter/receiver 7a, and disconnects the wireless LAN base station 11a. Thus, the operation of the wireless LAN transmitter/receiver 7a is automatically suspended when the communication by the wireless LAN is not possible, so as to lower the electric power consumption.

There will now be described the operation of the communication terminal 1b as the receiver.

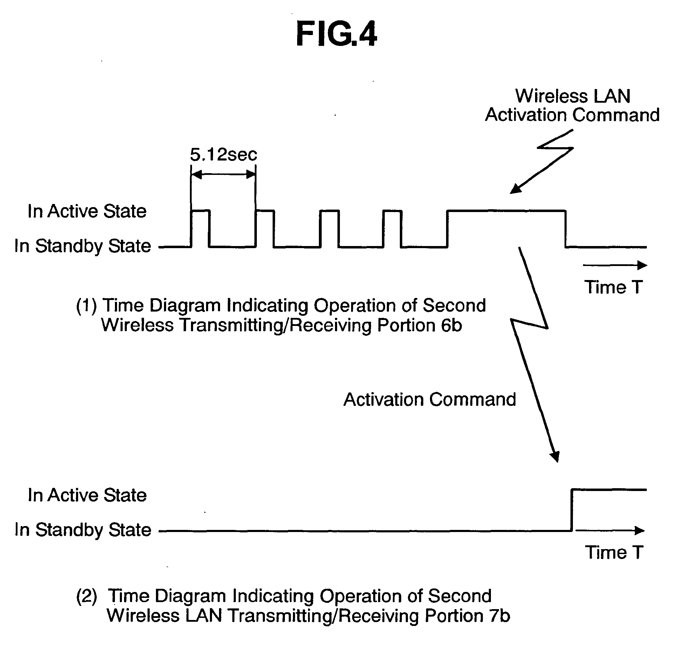

The wireless transmitter/receiver 6b incorporated in the communication terminal 1b operates intermittently to monitor an incoming call or data packet; for example, a receiving circuit of the wireless transmitter/receiver 6b is activated once in 5.12 seconds, as shown in Fig. 4. The intermittent operation of the wireless transmitter/receiver 6b contributes to reduce the power consumption. Meanwhile, the wireless LAN transmitter/receiver 7b is held in a standby mode until a request for activating the portion 7b is received, even after the communication terminal 1b has been powered on.

Upon receiving the Wireless LAN Activation Command from the management server 4, the wireless LAN transmitter/receiver 7b is activated. More specifically, the Wireless LAN Activation Command received by the wireless transmitter/receiver 6b is demodulated by the modem 107 and then converted into digital data, which is subjected to an error correction by the channel codec 108, and subsequently inputted into the controller 101. The controller 101 sends a control signal to the wireless LAN transmitter/receiver 7b to activate the wireless LAN transmitter/receiver 7b. The activated wireless LAN transmitter/receiver 7b forwards a Link Establishment Request to the wireless LAN base station 11b, as indicated by sequence No. 008.

According to the arrangement where the wireless transmitter/receiver 6b, which operates intermittently to monitor an incoming call or data packets, receives the Wireless LAN Activation Command, the communication terminal 1b can detect a request for establishing a communication utilizing the wireless LAN with the communication terminal 1b even while operation of the wireless transmitter/receiver 7b is suspended. Thus, the operation of the wireless LAN transmitter/receiver 7b can be suspended until the Wireless LAN Activation Command is received, which may lower the electric power consumption.

When the wireless LAN base station 11b permits a link establishment while the communication terminal 1b is located within the access zone 12b covered by the wireless LAN base station 11b, the wireless LAN base station 11b forwards a Link Establishment Acknowledge to the communication terminal 1b, as indicated by sequence No. 009. Upon receipt of the Link Establishment Acknowledge by the wireless LAN transmitter/receiver 7b, the controller 101 of the communication terminal 1b operates the wireless LAN transmitter/receiver 7b to transmit the IP address of the communication terminal 1b to the communication terminal 1a, as indicated by sequence No. 010. Subsequently, transmission of data packets between the communication terminals 1a and 1b is initiated, as indicated by sequence No. 011.

The data packets include packets of classification data indicating the kind or type of the transmitted data, e.g., dynamic image data, static image data and audio data. It is noted that audio data includes voice data representing speech communication made in a phone call, and sound file data as a recording of a sound such as voice or music. The classification data includes data used to distinguish between the different kinds of audio data.

If the wireless LAN transmitter/receiver 7b receives voice data representing speech communication as the data packets, the switch 109 is switched such that the data packets are inputted into the voice codec 110. On the other hand, if the wireless LAN transmitter/receiver 7b receives dynamic or static image data or sound clip data or the like, the switch 109 is switched such that the data packets are inputted into the data memory 114 to be stored therein.

Alternatively, the communication terminal 1a may forward the classification data of the data packets to the management server 4 together with the data representing the user address and password, prior to the transmission of the data packets, and the management server 4 may transmit the classification data, in addition to the Wireless LAN Activation Command, to the communication terminal 1b. In this case, the switch 109 can implement the switching between elements (the voice codec 110 or data memory 114) to which the inputted data is to be sent, before the wireless LAN transmitter/receiver 7b actually receives the data packets.

After termination of the transmission of the data packets, as indicated by sequence No. 012, respective controllers 101 of the communication terminals 1a, 1b receive a Termination Notification from the wireless LAN base stations 11a, 11b, respectively, and then suspend the operations of the wireless LAN transmitter/receiver 7a, 7b, respectively. It is preferable that the display 106 of each communication terminal 1a, 1b shows a message prompting each user to select whether to end communication utilizing the wireless LAN. In this case, if an end command is inputted, the operation of the wireless LAN transmitter/receiver 7a, 7b is suspended. In this regard, where a communication with another communication terminal utilizing the wireless LAN is continuously made by the communication terminal 1a or 1b after the termination of data transmission between the communication terminal 1a and 1b, an arrangement in which the operation of the wireless LAN transmitter/receiver 7a or 7b is deactivated and then reactivated to make the communication with another communication terminal, the power consumption at the communication terminal 1a or 1b may increase adversely, since each reactivation of the wireless LAN transmitter/receiver 7a, 7b requires electric power. However, in the arrangement according to this example wherein it is determined by the user whether communication via the wireless LAN is ended upon termination of a data communication session with another terminal, the power consumption may be inhibited from increasing.

Where the communication terminal 1b cannot receive the Link Establishment Acknowledge in a predetermined time period after the communication terminal 1b forwarded the Link Establishment Request to the wireless LAN base station 11b, or where the communication terminal 1b receives a Link Establishment Negative Acknowledge from the wireless LAN base station 11b, as indicated by sequence No. 013, the controller 101 of the communication terminal 1b operates to suspend the operation of the wireless LAN transmitter/receiver 7b and to have the display 106 show a notice informing the user that the communication terminal 1b is located outside the access zone 12b covered by the wireless LAN base station 11b. This notice may be a message or a mark meaning that the communication terminal 1b is not within the access zone 12b. For example, the message may read as follows: "A request for communication using the wireless LAN is received, but communication using the wireless LAN is not currently possible". The case where the communication terminal 1b cannot receive the Link Establishment Acknowledge occurs when the communication terminal 1b is not located within the access zone 12b of the wireless LAN base station 11b, for example.

This notice informs the user of the communication terminal 1b of the fact that there is an incoming request for communication via the wireless LAN, even when the user is not within the access zone 12b. The notice may include other information such as that related to the user of the communication terminal 1a as the sender, e.g., the name or address of the user, and that related to a location of an access zone 12 near to the user of the communication terminal 1b as the receiver. In response to this notice, the communication terminal 1b is able to make a communication with the communication terminal 1a by return message at a later time.

Thereafter, the controller 101 operates to control the channel codec 108 to subject the data representing that the link between the communication terminal 1b and the wireless LAN base station 11b cannot be established, to an error correction. The data subjected to the error correction is then modulated by the modem 107, so as to generate a Connection Failure Notification data, which is transmitted to the communication terminal 1a via the wireless base station 2, as indicated by sequence No. 014. Upon receipt of the Connection Failure Notification, the communication terminal 1a suspends the operation of its wireless LAN transmitter/receiver 7a.

When the communication terminal 1a receives the Connection Failure Notification, the display 106 of the communication terminal 1a shows a display asking the user whether the user desires to make a communication via the mobile network 3. If the user desires so, a data transmission is performed by the wireless transmitter/receiver 6a.

According to the above-described example, the wireless LAN transmitter/receiver 7 held in its standby mode is activated on the basis of the Wireless LAN Activation Command received by the wireless transmitter/receiver 6. Hence, the wireless LAN transmitter/receiver 7 is activated only when a telephone call is made and when packet transmission is performed. This arrangement may lower electric power consumption.

In the example, the access point covering the access zone has a wireless LAN base station. Instead of this arrangement, however, any other form of wireless communication may be employed. Further, in the described example, the communication terminal incorporates the transmitter/receiver connecting to the access point placed in the access zone to make a communication. However, the present invention may also be applied to a communication terminal which incorporates a plurality of transmitters/receivers, each of which is operable to communicate according to respective communication methods. In this modified arrangement, one of the transmitters/receivers is selectively operated to receive an activation command for activating one of the other transmitters/receivers which are held in a standby mode, so that the power consumption may be lowered. In this regard, the transmitter/receiver which consumes the least electric power among the plurality of the transmitters/receivers is preferably selected as the one transmitter/receiver that is operated to receive the activation command for activating the another transmitter/receiver.

As described above, in the communication terminal and communication system according to the exemplary embodiments, electric power consumption may be prevented from increasing, even when a plurality of communication methods are utilized. Therefore, the communication and standby times can be sufficiently secured, enhancing user-friendliness of the communication terminal and system.

## Claims

1. A communication terminal, comprising:
a first transmitter/receiver which transmits and receives data according to a first communication method;
a second transmitter/receiver which transmits and receives data according to a second communication method; and
a controller which operates to activate the second transmitter/receiver when the first transmitter/receiver receives a request for activating the second transmitter/receiver.

2. The communication terminal according to claim 1,
wherein the controller operates to activate the first transmitter/receiver when electric power is applied to the communication terminal and to suspend operation of the second transmitter/receiver until the first transmitter/receiver receives a request for activating the second transmitter/receiver.

3. The communication terminal according to claim 1,
wherein the first transmitter/receiver is connectable to a wireless base station in a mobile network, while the second transmitter/receiver is connectable to a wireless LAN (Local Area Network) base station.

4. A communication terminal, comprising:
a first transmitter/receiver which transmits and receives data to and from a first base station;
a second transmitter/receiver which transmits and receives data to and from a second base station; and
a controller which operates to suspend an operation of the second transmitter/receiver until the first transmitter/receiver receives data representing a request for a communication by the second transmitter/receiver.

5. The communication terminal according to claim 4,
wherein the first transmitter/receiver forwards a notification indicating that the second transmitter/receiver is not able to transmit and receive data, when the first transmitter/receiver has received the data representing the request for the communication by the second transmitter/receiver and the communication by the second transmitter/receiver is not possible.

6. The communication terminal according to claim 4, further comprising:
a memory which stores identification data of the communication terminal;
wherein the first transmitter/receiver operates to transmit the identification data of the first communication terminal to the management server, when a user inputs a request for a communication by utilizing the second transmitter/receiver.

7. A communication system, comprising:
a first communication terminal having a first wireless transmitter/receiver and a second wireless transmitter/receiver;
a second communication terminal having a third wireless transmitter/receiver and a fourth wireless transmitter/receiver; and
a management server having a memory in which an identification data of the first communication terminal is stored;
wherein the first wireless transmitter/receiver operates to transmit identification data of the first communication terminal to the management server, when a user inputs into the first communication terminal a request for a communication with the second communication terminal by utilizing the second wireless transmitter/receiver; and
the management server executes an authentication of the user of the first communication terminal, on the basis of the identification data of the communication terminal which was forwarded from the first communication terminal and the identification data which is stored in the memory of the management server, and forwards a request for activating the fourth wireless transmitter/receiver to the third wireless transmitter/receiver if the authentication succeeds.

8. The communication system according to claim 7, wherein the first wireless transmitter/receiver and the third wireless transmitter/receiver are connectable to a wireless base station in a mobile network, while the second wireless transmitter/receiver and the fourth wireless transmitter/receiver are connectable to a base station in a wireless LAN.
